# EUROPEAN PATENT APPLICATION

(11) **EP 4 434 880 A1**
(43) Date of publication of application: **25.09.2024**
(21) Application number: 23163557.4
(22) Date of filing: 22.03.2023
(51) Int. Cl.: B64C 29/00, B64C 21/00, B64C 3/38, B64D 29/02

(54) **PROPULSION UNIT FOR A VERTICAL TAKE-OFF AND LANDING AIRCRAFT**

(71) Applicant: Lilium GmbH, 82234 Wessling (DE)
(72) Inventor: Sorbilli Cardoso de Sousa, Rodrigo, 82234 Wessling (DE); Bittel, Nele, 82234 Wessling (DE)
(74) Representative: Mathys & Squire

(57) **Abstract**

The invention related to a propulsion unit (10) for a vertical take-off and landing aircraft (100), comprising a fan engine housing (20) with a fan engine (24), further comprising a mounting interface (30) for mounting at a wing (110) of the aircraft (100) moveable between at least one hovering position (HP) and at least one cruising position (CP), wherein the fan engine housing (20) comprises at least one aerodynamic stall element (40) at an upper leading edge (23) and wherein the aerodynamic stall element (40) extends transverse to an engine axis (EA) of the fan engine housing (20) to generate a controlled stall at the upper surface (25) at least in one position between the at least one hovering position (HP) and the at least one cruising position (CP) during flight conditions.

## Description

The present invention relates to a propulsion unit for a vertical take-off and landing aircraft, a wing for a vertical take-off and landing aircraft as well as an aircraft comprising at least two of those wings.

It is in general known to provide propulsion units for aircrafts to provide a propulsion force moving the aircraft forward. It is also known that aircrafts can be built for vertical take-off and landing and thereby a propulsion unit needs to provide a force in different angles for the take-off and landing functionality as well as the cruising functionality. The propulsion unit of those vertical take-off and landing aircrafts needs to be moved between different positions which can also be considered as a hovering position and a cruising position for forward movement of the aircraft to provide the mentioned propulsion force in different directions. Since the movement usually results in different forward velocities and upward velocities of the aircraft different aerodynamic situations apply to the aircraft depending on the respective speed and position/direction of the propulsion unit.

It is one disadvantage of known propulsion units for vertical take-off and landing aircrafts that there usually are positions or areas between the defined hovering position and the defined cruising position in which so called aerodynamic stall applies. Aerodynamic stall means that airflow is detaching from aerodynamic surfaces and thereby significantly changing the uplift force generated by those aerodynamic elements.

It is an object of the present invention to provide a propulsion unit that allows a moveability between at least one hovering position and at least one cruising position and thereby comes along with an easily controllable stall situation between those two defined positions.

Aforesaid problem is solved by a propulsion unit according to independent claim 1, a control surface according to claim 13, a wing according to independent claim 14 as well as an aircraft according to independent claim 15. Further features and details of the invention are provided by the subclaims, the descriptions and the drawings. Features and details are mentioned in respect to claim 1 can also be combined with features in the subclaims as well in the wing and/or the aircraft according to independent claims 13, 14 and 15 and vice versa.

Aforesaid problem is solved by a propulsion unit for a vertical take-off and landing aircraft. That propulsion unit comprises a fan engine housing with a fan engine and with an upstream air intake having a section with an upper leading edge. The propulsion unit further comprises a mounting interface for mounting at a wing of the aircraft moveable between at least one hovering position and at least one cruising position. The fan engine housing comprises at least one aerodynamic stall element at the upper leading edge. Such aerodynamic stall element extends transverse to an engine axis of the fan engine to generate a controlled stall at the upper surface at least in one position between the at least one hovering position and the at least one cruising position during flight conditions.

An inventive propulsion unit is constructed to be moveable between a hovering position and a cruising position. For a vertical take-off operation, the aircraft the propulsion unit is be moved into the hovering position wherein the force generated by the fan engine is more or less vertical. That vertical force is generated by the propulsion unit and thereby lifts the aircraft from the ground without or with only little forward movement.

Once the vertical take-off aircraft has arrived at a certain hovering altitude, the propulsion unit then is slowly moved from the hovering position into the cruising position to gather speed over ground and keep or increase altitude. By moving the propulsion unit via the mounting interface from the hovering position in the direction of the cruising position the generated force from the fan engine thereby gets more and more angled and thereby is moved from a vertical orientation to a horizontal orientation. The movement from the hovering position to the cruising position thereby results in a slow but steady increase of the speed over ground for the aircraft. By increasing the speed, the aerodynamic effective surfaces of the aircraft, in particular the wing of the aircraft and, more importantly, the housing surfaces of the fan engine housing now start providing and generating an uplift force due to the speed over ground. The uplift force is generated by those surfaces having an aerodynamic functionality and thereby generate uplift force while the vertical part of the propulsion force generated by the fan engine is decreased by the movement into the cruising position.

The end of that propulsion unit movement is defined by arriving at the at least one cruising position and the force provided by the propulsion unit is mainly used for forward movement and to increase or maintain the speed over ground for the aircraft. The uplift force in the cruising position is mainly provided by the aerodynamic functionalities of the respected surfaces which are wing surfaces as well as surfaces of the fan engine housing due to attached air flow.

According to aforesaid description it can be seen that in particular the movement of the fan housing and of the complete propulsion unit from the hovering position into the cruising position will pass several intermediate positions with undefined or relatively complex aerodynamic situations. For all of those intermediate positions the specific aerodynamics additionally depend on several external parameters. Besides the controllable parameters of the relative position in between the cruising position and the hovering position and the rotation speed of the fan engine, the aerodynamic functionality depends on the external conditions like wind, air pressure, speed over ground of the aircraft and the like. Thereby it is not possible or at least not easy to be predicted what kind of aerodynamic situation applies to the propulsion unit during the movement from the cruising position into the hovering position.

Due to the uncertainty in the high complexity of the aerodynamic predictability in between the cruising position and the hovering position it cannot or at least not in an easy way be calculated at what position a stall situation applies. A stall situation would be a situation when the air flow over the fan engine housing is at least partly separated from the respective surface and thereby the aerodynamic situation, in particular the uplifting force, is changed significantly. As to this problem the present invention provides an easy and very effective solution. By applying a so-called aerodynamic stall element at the upper leading edge of the fan engine housing that uncontrollable, unpredictable and complex stall situation can be controlled a lot easier. An aerodynamic stall element which can according to the present invention in particular be embodied in form of a stall strip, defines and changes the attack angle and the attack point of the air flow at the upper leading edge of the fan engine housing. By that geometrical defined amendment to the attack angle and the front leading edge of the fan engine housing the stall situation is changed. In particular the stall is by that way provided in a more defined, less complex and thus predictable situation such that now by the movement from the hovering position into the cruising position the stall would apply at a predefined and predicted position and/or phase by that movement into the cruising position. In particular, this can be based on the fact that flow hysteresis is reduced due to a change in the separation mechanism of the flow. Thereby the controllability of the whole transition from the hovering functionality into the cruising functionality is easier to be controlled in particular when flight conditions and external parameters like air pressure, wind and speed of the aircraft change from time to time.

According to the present invention the functionality of the aerodynamic stall element is provided by an extension transverse to the engine axis. This extension can also be defined as a spanwise extension meaning that the dynamic stall element extends along or in generally along the span direction of wings provided at both sides of the aircraft. According to the present invention thereby external flight condition parameters like wind, turbulences, speed of the aircraft, air pressure or the like are less influencing to the stall situation at the propulsion unit and thereby the controllability of the propulsion unit by its movement from the hovering position to the cruising position is optimized. In other words, the stall situation is more gradual and less impactful and as such these influences have a smaller effect but still influence the stall points.

Of course, the same applies also for the landing movement meaning the aircraft reducing speed by moving the propulsion unit form the cruising position back to the hovering position to result in a vertical landing functionality for the aircraft. Both movements, for take-off from the hovering position to the cruising position and for landing from the cruising position back to the hovering position are provided with the same aerodynamic advantages by providing the aerodynamic stall element at the upper leading edge of the fan engine housing.

According to the present invention a propulsion unit can have the aerodynamic stall element provided with a sharp edge, in particular having a triangled cross section. This stall element, for example embodied as a stall strip, can have a triangled cross section whereby the base of that triangle is attached to the upper leading edge of the fan engine housing. The tip of that triangle cross section provides the sharp edge thereby facing away from the upper leading edge for example in an angled or parallel way along to the engine axis of the propulsion unit. The specific provision of a tip or a sharp edge of the stall element increases its stall influencing functionality and thereby enhances the advantages discussed in detail above.

The advantages and technical features discussed above may also be applied to any other moveable control surface of an aircraft, Thus, a further aspect on the present invention is also a control surface with or without a propulsion functionality, comprising a mounting interface for mounting at a wing of the aircraft moveable between at least one hovering position and at least one cruising position, wherein the control surface comprises at least one aerodynamic stall element at a leading edge and wherein the aerodynamic stall element extends transverse to a longitudinal axis of the aircraft to generate a controlled stall at the upper surface of the control surface at least in one position between the at least one hovering position and the at least one cruising position during flight conditions. The following description relating to a propulsion unit and specific features can also be applied to a passive control surface. According to the present invention it can be an advantage if in a propulsion unit the fan engine housing comprises at least one fan engine duct. That means that a duct can comprise a closed and guided air flow through the engine housing. While in general the fan engine housing can be at least partly open to the sides a fan engine duct provides a more or less closed and thereby guided path to have the airflow entering the fan engine housing at one side and leaving the fan engine housing at the other side. In other words, a fan engine duct surrounds the fan engine and thereby generates a specific guidance for moving the air flow through the fan engine housing and thereby also generating a very specific and orientated propulsion force.

A further advantage can be achieved if according to the present invention the fan engine of the propulsion unit is configured to be an electrical fan engine. In particular when using an inventive propulsion unit for small and medium sized air crafts, electrical fan engines can comprise a significant advantage. They can be battery driven or can have a different electricity resource like fuel cells or the like. Using an electrical fan engine comes with an additional advantage by the fact that the electrical fan engine can be provided in a very small and lightweight embodiment thereby allowing the fan engine itself and the whole propulsion unit to be itself lightweight and small for conducting and easing the movement from the hovering position into the cruising position. The size and the weight of the moveable propulsion unit can thereby significantly be reduced since the energy source for the electricity can be non-moveable position for example in the main body of the aircraft.

It is also an advantage that according to the present invention the aerodynamic stall element of the propulsion unit comprises a constant or generally constant cross section. As discussed above, the aerodynamic stall element can also be described as a stall strip extending with a constant or generally constant cross section. Beside the fact that this allows a very easy and cost-efficient way of producing the stall element it is also an advantage since the stall functionality is provided in a stable and continuous manner along the extension of the stall element itself. This allows across the span wise direction of the propulsion unit and in particular the spanwise extension of the aerodynamic stall element to have the same predictability and easy controllability of the propulsion unit by predicting and controlling the stall situations by moving the propulsion unit from the hovering position into the cruising position.

Also, an advantage is if according to the present invention the aerodynamic stall element of the propulsion unit extends along the complete upper leading edge of the fan engine housing, in particular following a circular arc of the air intake. While providing a small or short aerodynamic stall element also might be able to provide the stall advantages as discussed above, a longer extension in spanwise direction increases that advantages significantly. In particular when covering the complete or almost the complete upper leading edge of the fan engine housing with the aerodynamic stall element the respective stall advantages can be even maximised.

Further of advantage can be if the fan engine housing of an inventive propulsion unit comprises at least two fan engine ducts. Each is configured to have a fan engine in particular having one single aerodynamic stall element extending across the upper leading edges of all fan engine ducts. For example, propulsion units can have two or more fan engines each embodied in a specific fan engine duct while all are using a combined or common aerodynamic stall element which extends across the upper leading edges of the complete fan engine housing and thereby provides the stall advantage for all the fan engines of that propulsion unit. Again, this reduces complexity and weight since one stall strip or stall element can be used for two or even more fan engine ducts.

A further advantage can be achieved if according to the present invention the aerodynamic stall element of the propulsion unit is positioned in the middle or substantially in the middle of the upper leading edge. The middle is thereby defined in a direction vertical or perpendicular to the engine axis. Of course, the aerodynamic stall element can also be facing downward or upward for example having an angled direction to the engine axis as mentioned above.

Also, an advantage can be achieved if the aerodynamic stall element according to the inventive propulsion unit comprises a stall element tip pointing in a tip direction extending along or parallel to the engine axis to the fan engine duct. Alternatively, or additionally at least partly the tip direction can also face downwards or upwards thereby providing an angled intersection with the extension of the engine axis itself. Both possibilities allow an even better definition of the stall position or the stall phase respectively stall angles for the movement of the whole propulsion unit from the hovering position into the cruising position and vice versa.

A further advantage can be achieved if according to the present invention the aerodynamic stall element of the propulsion unit and the upper leading edge are formed in one piece. For example, a composite material using fibre and matrix material can be used to embody such a combined one-piece solution for the aerodynamic stall element at the upper leading edge. One alternative of using a composite material would also be to provide a mounting solution for example adhering the aerodynamic stall element using an adhesive material at the upper leading edge.

Also, an advantage can be achieved if the mounting interface of the propulsion unit comprises a rotational axis for the movement between the at least one hovering position and the at least one cruising position. The rotational axis thereby extends along or in parallel to the aerodynamic stall element. In other words, the rotational axis of the mounting interface has a specific geometrical correlation and relative extension to the extension of the spanwise direction of the aerodynamic stall element. By keeping the alignment between the aerodynamic stall element and the mounting interface the stall advantages as discussed above are even easier achieved and provide a more optimized stall control for the transitioning movement of the whole propulsion unit.

It is further of advantage if according to the present invention the aerodynamic stall element of the propulsion unit is positioned in front of the mounting interface in the at least one cruising position.

A further aspect of the present invention is to provide a wing for a vertical take-off and landing aircraft. Such a wing has a wing section to generate lifting force during the cruising movement of the aircraft and is characterized by the fact that the wing comprises at least one counter mounting interface having an inventive propulsion unit according to the present invention mounted to via the mounting interface. Thereby the wing comes along with the same advantages as discussed in detail with respect to the propulsion unit above.

A further aspect of the present invention is to provide an aircraft for vertical take-off and landing comprising at least two inventive wings, in particular two nose wings and two tail wings. This means that also the aircraft comes along with the same advantages as discussed in detail with respect to the wing and the propulsion unit above.

The present invention is described in more detail with respect to the figures. Those figures show schematically:
- Figure 1: one embodiment of an inventive propulsion unit in cruising position,
- Figure 2: the embodiment of figure 1 in hovering position,
- Figure 3: the embodiment of figure 1 and 2 in an intermediate stall position in a stall region,
- Figure 4: one embodiment of a propulsion unit with three different fan engines in one fan engine housing,
- Figure 5: one example for an aircraft with wings configured to have one or more propulsion units.

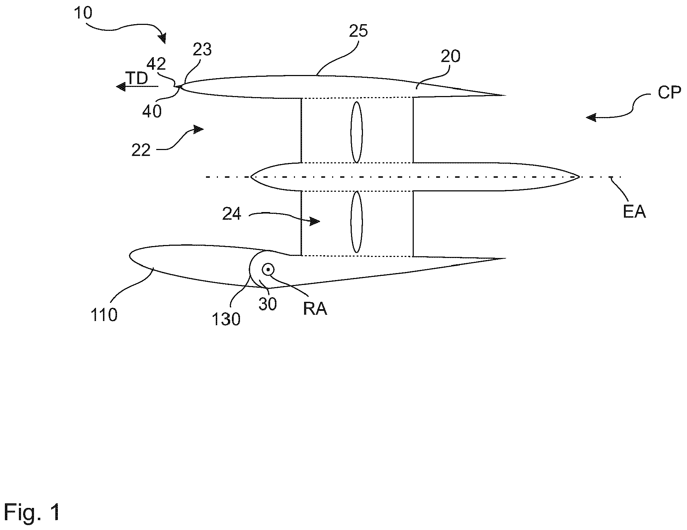

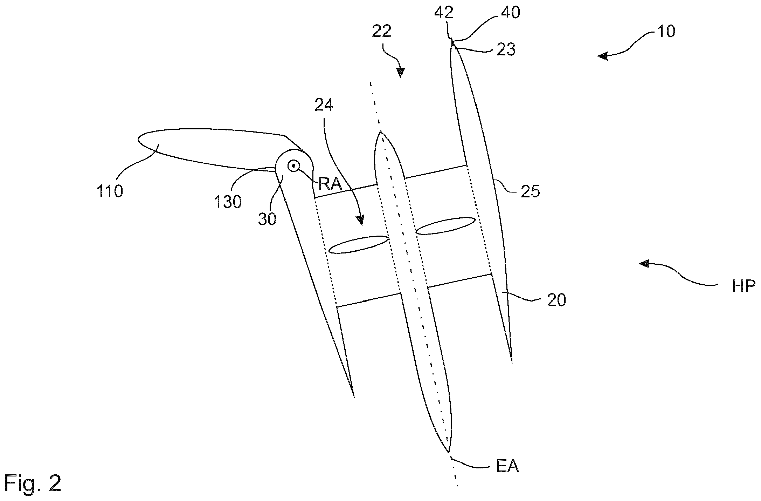

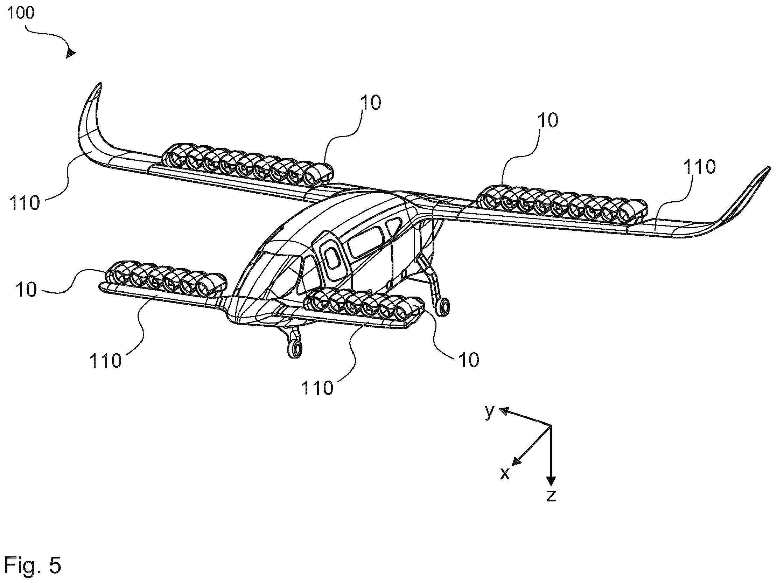

Figures 1, 2 and 3 show one inventive solution for the propulsion unit 10. Those figures show this embodiment in a schematical side cross section to show the functionality of the movement for landing and for take-off. For take-off movement the propulsion unit 10 is allocated in a hovering position HP as depicted in figure 2. The fan engine 24 which for example can be embodied as an electrical version of a fan engine 24 has an almost vertical direction with its engine axis EA. By starting the fan engine 24, a vertical directed uplifting force which is provided by the propulsion unit 10. An aircraft 100 is shown in figure 5 thereby is lifted slowly from the ground with very little or almost none forward speed over ground. The uplifting force is generated by an air flow which is sucked into the fan engine duct 22 of the fan engine housing 20. Thereby the air flow is divided by the upper leading edge 23 of the fan housing 20 and that dividing takes in a part air flow being guided into the fan engine duct 22 and another part will be guided along the outer side and the upper surface 25 of the fan engine housing 20.

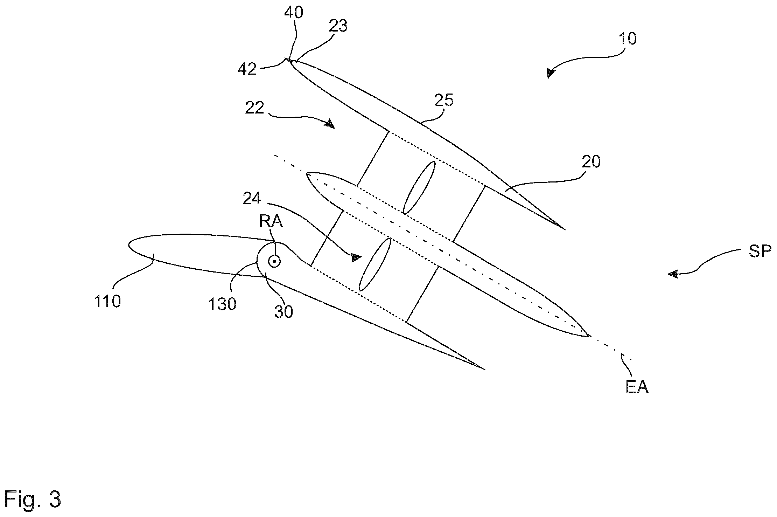

When arriving at a certain level of altitude, the propulsion unit 10 will slowly be moved into a transitioning movement to angle the provided propulsion force by moving the engine axis EA from the hovering position HP with a more or less vertical extension into a more or less parallel or horizontal extension in the cruising position CP as depicted in figure 1. During that transitional movement in a region which can be considered as a stall region comprising for example the one stall position SP can be achieved as depicted in figure 3. The movement is controlled by an electrical motor or the like which can move the whole propulsion unit 10 along the mounting interface 30 which is mounted at the counter mounting interface 130 of the wing 110. Due to the fact that at the upper leading edge 23 of the fan engine housing 20 an aerodynamic stall element 40 is provided the stall element tip 42 of that stall element 40 is thereby generating a specific stall situation which is less dependent from external circumstances like air pressure, turbulence, wind situations or the like.

For example, the embodiment of figure 3 can, under certain circumstances, be a stall position SP wherein a stall applies and the air flow is separated from the upper surface 25 of the fan engine housing 20. By moving the propulsion unit 10 further into the direction of the cruising position CP as depicted in figure 1 the stall situation will end by the propulsion unit 10 leaving the stall region in between the hovering position HP and the cruising position CP and the air flow will reattach to the upper surface 25 of the fan engine housing 20. As soon as in the situation in figure 1 the cruising position CP for the propulsion unit 10 is confirmed and the aircraft 100 is basically pushed forward by a propulsion force along the engine axis EA which is aligned horizontically or in general horizontical.

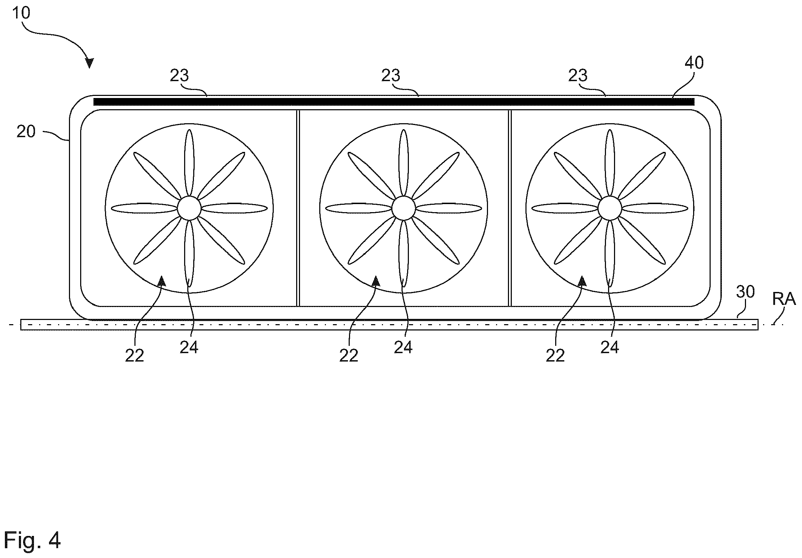

Figure 4 shows a different embodiment of a propulsion unit 10 viewed along the engine axis EA. This shows in particular the rotational axis RA of the mounting interface 30. The fan engine housing 20 comprises in this embodiment three fan engine ducts 22 which are located adjacent to each other each comprising a similar or identical fan engine 24. To the keep the complexity as low as possible all of those three different and separate fan engines 24 and fan engine ducts 22 work together with one single aerodynamic stall element 40 which is positioned and extending over the upper leading edges 23 of all fan engine ducts 22. That aerodynamic stall elements 40 can be considered to be one single or common aerodynamic stall element 40 for all fan engines 24.

Figure 5 shows an example of an aircraft 100 having the ability for vertical take-off and landing. It has front wings 110 and back wings 110 wherein each of the wings are configured to have several fan engine housings with propulsion units 10. Of course, those propulsion units 10 can be one single propulsion unit 10 or can be separated into part propulsion units to be controllable in the more sophisticated manner.

Aforesaid discussion of the embodiment describes the present invention only be the way of example.

### Reference signs

- 10: propulsion unit
- 20: fan engine housing
- 22: fan engine duct
- 23: upper leading edge
- 24: fan engine
- 25: upper surface
- 30: mounting interface
- 40: aerodynamic stall element
- 42: stall element tip

- 100: aircraft
- 110: wing
- 130: counter-mounting interface

- HP: hovering position
- CP: cruising position
- SP: stall position
- EA: engine axis
- RA: rotational axis
- TD: tip direction

## Claims

1. Propulsion unit (10) for a vertical take-off and landing aircraft (100), comprising a fan engine housing (20) with a fan engine (24) and with an upstream air intake having a section with an upper leading edge (23), further comprising a mounting interface (30) for mounting at a wing (110) of the aircraft (100) moveable between at least one hovering position (HP) and at least one cruising position (CP), wherein the fan engine housing (20) comprises at least one aerodynamic stall element (40) at the upper leading edge (23) and wherein the aerodynamic stall element (40) extends transverse to an engine axis (EA) of the fan engine (24) to generate a controlled stall at the upper surface (25) at least in one position between the at least one hovering position (HP) and the at least one cruising position (CP) during flight conditions.

2. Propulsion unit (10) according to claim 1, **characterised in that** the aerodynamic stall element (40) comprises a sharp edge, in particular having a triangled cross section.

3. Propulsion unit (10) according to any of the preceding claims, **characterised in that** the fan engine housing (20) comprises at least one fan engine duct (22).

4. Propulsion unit (10) according to any of the preceding claims, **characterised in that** the fan engine (24) is configured to be an electrical fan engine (24).

5. Propulsion unit (10) according to any of the preceding claims, **characterised in that** the aerodynamic stall element (40) comprises a constant or generally constant cross section.

6. Propulsion unit (10) according to any of the preceding claims, **characterised in that** the aerodynamic stall element (40) extends along the complete upper leading edge (23), in particular following a circular arc of the air intake.

7. Propulsion unit (10) according to any of the preceding claims, **characterised in that** the fan engine housing (20) comprises at least two fan engine ducts (22) each with a fan engine (24), in particular having one single aerodynamic stall element (40) extending across the upper leading edges (23) of all fan engine ducts (22).

8. Propulsion unit (10) according to any of the preceding claims, **characterised in that** the aerodynamic stall element (40) is positioned in the middle or substantially in the middle of the upper leading edge (23).

9. Propulsion unit (10) according to any of the preceding claims, **characterised in that** the aerodynamic stall element (40) comprises a stall element tip (42) pointing in a tip direction (TD) extending along or parallel to the engine axis (EA) of the fan engine duct (22).

10. Propulsion unit (10) according to any of the preceding claims, **characterised in that** the aerodynamic stall element (40) and the upper leading edge (23) are formed in one piece.

11. Propulsion unit (10) according to any of the preceding claims, **characterised in that** the mounting interface (30) comprises a rotational axis (RA) for the movement between the at least one hovering position (HP) and the at least one cruising position (CP), wherein the rotational axis (RA) extends along or in parallel to the aerodynamic stall element (30).

12. Propulsion unit (10) according to any of the preceding claims, **characterised in that** the aerodynamic stall element (40) is positioned in front of the mounting interface (30) in the at least one cruising position (CP).

13. Control surface for a vertical take-off and landing aircraft (100), comprising a mounting interface (30) for mounting at a wing (110) of the aircraft (100) moveable between at least one hovering position (HP) and at least one cruising position (CP), wherein the control surface comprises at least one aerodynamic stall element (40) at a leading edge (23) and wherein the aerodynamic stall element (40) extends transverse to a longitudinal axis of the aircraft (100) to generate a controlled stall at the control surface at least in one position between the at least one hovering position (HP) and the at least one cruising position (CP) during flight conditions.

14. Wing (110) for a vertical take-off and landing aircraft (100), comprising a wing section to generate lifting force during a cruising movement of the aircraft (100), **characterised in that** the wing (110) comprises at least one counter-mounting interface (130) having a propulsion unit (10) according to any of claims 1 to 12 and/or a control surface according to claim 13 mounted to via the mounting interface (30).

15. Aircraft (100) for vertical take-off and landing comprising at least two wings (110) with the features of claim 14, in particular comprising two nose wings (110) and two tail wings (110) with the features of claim 14.
